# EUROPEAN PATENT APPLICATION

(11) **EP 1 657 218 A1**
(43) Date of publication of application: **17.05.2006**
(21) Application number: 04078088.4
(22) Date of filing: 10.11.2004
(51) Int. Cl.: C01G 23/02, C22B 34/12

(54) **Process and apparatus for producing purified titanium tetrachloride**

(71) Applicant: Kerr-McGee Pigments (Holland) B.V., 3197 KK Botlek, Rotterdam (NL)
(72) Inventor: Robbe, Rudolf, 2992 NS Barendrecht (NL); van Beek, Pieter, 3225 TH Hellevoetsluis (NL)
(74) Representative: Winckels, Johannes Hubertus F.

(57) **Abstract**

The invention relates to a process and apparatus for producing a purified chlorinator off-gas.

In accordance with the invention, the chlorinator off-gas is passed through a line quench step where it is cooled using the heat of evaporation of liquid TiCl₄ droplets that are injected in a venturi.

## Description

The invention relates to processes and apparatuses for producing a purified chlorinator off-gas.

Titanium tetrachloride is typically produced by reacting titanium dioxide containing ore with chlorine at a temperature of approximately 1000 °C in a (fluidized bed) reactor. The off-gas contains the product TiCl₄ gas, together with CO gas, CO₂ gas and gaseous impurities (typically metal chlorides, such as iron, zirconium and/or niobium chlorides), as well as solids, such as TiO₂, C and SiO₂.

It is known from US-A-2 446 181 to remove these gaseous impurities by means of fractional condensation, *viz.* by rapidly cooling the off-gas by providing small droplets of liquid TiCl₄ in the process gas, which is done by spraying liquid TiCl₄ on a rotating disk. As a result of the injection of small TiCl₄ droplets, the impurities condensate and form solid particles, which may subsequently be separated from the gas stream. US-A-3 628 913 and US-A-4 066 424 describe similar systems. In the latter publication a nozzle is used through which the liquid TiCl₄ is injected in the chlorinator off-gas.

Although the injection of liquid TiCl₄, e.g. through a nozzle or over a rotating disk, may provide for the desired removal of impurities from the off-gas to some extent, in practice it has been found that the rate of evaporation of the liquid TiCl₄ is insufficient and therefore often causes problems leading to incomplete vaporization of the TiCl₄, which in turn may give rise to fouling and/or plugging of the equipment and overloading of the downstream TiCl₄ fume scrubber. Moreover, the rotating disk is very sensitive to malfunctioning because of the moving parts that are involved. In addition, the known techniques are difficult to incorporate in existing equipment, so that retrofitting on existing processes is difficult and requires considerable redesign of the equipment.

The present inventors have found that the above-mentioned problems can be overcome by using a specific means for injecting and subsequently evaporating the liquid TiCl₄. In particular it was found that the use of a venturi for this purpose is very beneficial. Thus, in a first aspect, the present invention is directed to a process for producing purified TiCl₄, comprising a step wherein liquid TiCl₄ droplets are sprayed into a TiCl₄ off-gas stream through a venturi.

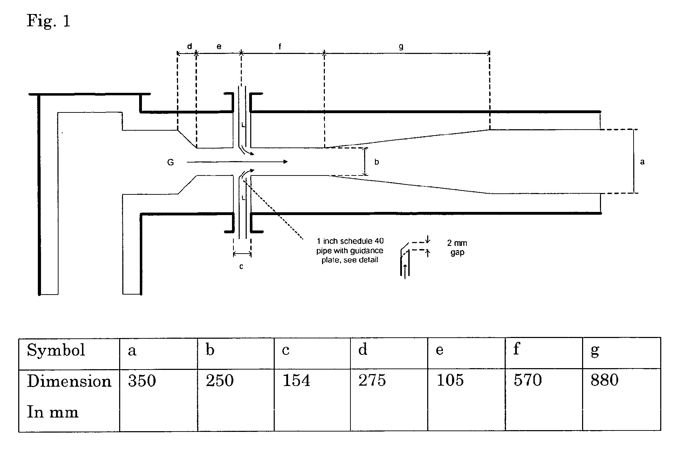

Figure 1 schematically shows how the TiCl₄ droplets are introduced in the off-gas stream in accordance with the present invention. In particular, a gas stream G enters a restriction at some point in the pipe connecting the chlorinator and the gas/solid separation step. In the embodiment depicted in Figure 1, the liquid enters through two entry pipes that are placed opposite of each other on the perimeter of the off-gas transport pipe. It is also possible to use just one, or more than two entry pipes, but two is preferred because it was found that a better distribution is obtained than with one pipe. Also the improvement when more than two pipes are used with respect to distribution generally do not justify the extra investment.

By using a venturi in accordance with the present invention, droplets may be produced having a maximum particle size that is sufficiently small to ensure that the droplets are essentially completely evaporated before the gas enters a subsequent gas/solid separation step. The spraying of the particles results in the gas being cooled, typically from about 1000 °C to about 180-200 °C. By this cooling step, the contaminations, such as the chlorides of iron, niobium and zirconium, are condensed and may be separated from the gas stream in the subsequent gas/solid separator.

Thus, in one embodiment, the present invention is directed to a process for producing TiCl₄, which process comprises a quench step, wherein a gaseous chlorinator off-gas is cooled by spraying liquid TiCl₄ droplets in said off-gas; and a subsequent solid separation step for separating particles from said off-gas, wherein the sprayed droplets in said quench step have a size that is sufficiently small for evaporating substantially completely said particles before entering said solid separation step.

The gas leaving the chlorinator, usually further contains blow-over, *viz.* particulate solids from the chlorinator, in particular TiO₂ C, and SiO₂ from the ore and cokes, being generally applied in excess to the chlorinator. This particulate matter can be separated in the subsequent solid separation step as well.

Care must be taken to avoid the temperature in the cooling step dropping below the dew point of TiCl₄, since this would result in the gaseous TiCl₄ becoming liquid, which would not only result in product loss (the liquid TiCl₄ would be removed from the gaseous product and follow the route of the solid material, which is for instance dumped or processed as waste. When contacted with water, liquid TiCl₄ gives rise to extremely rapid HCl gas formation and overloading of downstream fume scrubber, which may in turn result in HCl being released to the atmosphere.

In accordance with the present invention, the occurrence of TiCl₄ droplets is effectively prevented by employing a venturi. To this end, the temperature of the gas at the venturi injection point is preferably kept above the TiCl₄ dew point. This dew point varies with process conditions, in particular with gas composition and pressure. The relationship between partial pressure of TiCl₄ and dewpoint is well-known.

By employing the present invention, the impurities in the chlorinator off-gas, including FeCl₂, FeCl₃, MgCl₂, ZrCl₄, NbOCl₃, NbCl₅ and optionally other impurities) may be removed there from in the gas/solid separation step in a very efficient manner.

In order to ensure that all - or virtually all - TiCl₄ droplets are evaporated before the gas enters the gas/solid separation step, all relevant process factors must be taken into consideration. In particular, the residence time of the particles between the venturi injection point and the gas/solid separation step is of importance, which residence time depends on the distance between these two points and the gas velocity. The desired maximum droplet size depends on these process factors as well. In general, however, it is preferred that the maximum diameter of the injected TiCl₄ droplets is less than 500 µm, preferably between 100 and 300 µm, since this generally ensures that the droplets are properly evaporated and at the same time a sufficient cooling effect is obtained. To ensure a good operation, the gas temperature at the outlet of the gas/solid separator step can be used as an indicator that the gas temperature throughout the line quench is at a proper value. Preferably the gas temperature at the outlet of the gas/solid separator is less than 210 °C. In accordance with the present invention, this temperature may be from as low as165 to 200 °C, more preferably about 170 °C.

Also with regard to the mean gas velocity of the off-gas in the line quench step, as measured near the injection point of the TiCl₄ droplets, this may vary widely depending on the specific process conditions. However, good results have been obtained with velocities of from 20 to 60 m/s, preferably from 40 to 60 m/s.

The chlorinator off-gas is preferably cooled to a temperature in the range of about 160 to about 210 °C, preferably to about 170 °C, as measured before the gas entered the gas/solid separation step.

In the gas/solid separation step preferably the solids are separated from the gas stream using a cyclone.

The venturi of the present invention is typically formed by a reduction of the cross-sectional diameter of the line feeding the chlorinator off-gas to the gas/solid separator. The liquid TiCl₄ is fed e.g. perpendicularly to a point somewhere in this restriction. The venturi schematically shown in Figure 1 shows a possible design for the venturi of the present invention. The exact dimension may vary and Figure 1 is not drawn to scale. As discussed, the number of entry pipes may vary, but is preferably two. Typical dimensions with reference to Figure 1 are as follows:

| Symbol | *a* | *b* | *c* | *d* | *e* | *f* | *g* |
|---|---|---|---|---|---|---|---|
| Dimension in mm | 350 | 250 | 154 | 275 | 105 | 570 | 880 |

Deviations to these typical dimension may be made, for instance deviations of up to +/- 10 % for each of the above-mentioned dimensions may provide acceptable results.

The magnitude of the length of the pipe before entrance of the venturi may vary widely, but is usually taken as small as possible to ensure that the liquid TiCl₄ after injection has sufficient opportunity to evaporate.

Suitable materials for constructing the venturi are the common materials used in standard design of this type of equipment and are known to the skilled person. Various kinds of corrosion resistant materials are suitable, such as HyMOR™ castable refractories, such as Plicast HyMOR 2800. A further advantage of the present invention is that the operating conditions do not differ, or differ only to a minimal extent, from the normal operation conditions, *viz.* from operating conditions that are required when using prior art means of introducing liquid TiCl₄ for the same purpose.

An apparatus for producing TiCl₄ in accordance with the present invention, may comprise a chlorinator, preferably a fluidized bed chlorinator, which is connected to a line quench, which line quench is connected to a solids separator, preferably a cyclone, wherein a venturi is connected to said line quench so that liquid TiCl₄ may be atomized by said venturi and may be fed inside said line quench.

Another advantage of the present invention is that the venturi system can be retrofitted on existing equipment relatively easily.

### EXAMPLES

### Example (reference)

In a TiCl₄ production facility comprising a fluidized bed chlorinator having a production rate of 3.5 ton/hr TiO₂ ore, a chlorinator off-gas flow of 7150 m³/h @ 860 °C and 1.8 bar (absolute) was produced. The chlorinator temperature was 1000 °C.

Liquid TiCl₄ having a temperature of 80 °C was introduced at a rate of 15.5 m³/hr in the line quench step to cool the the off-gas. To this end, TiCl₄ droplets where introduced in the off-gas transport pipe using a conventional injection system, comprising two 1 inch (2.54 cm) ID nozzles, which were placed behind each other in the direction of the flow at a distance of approximately 70 cm. The diameter of the off-gas transport pipe was 350 mm, which resulted in a mean gas velocity at the venturi of 20 m/s. In the vicinity of the tip of each nozzle, guidance plates were mounted. As a result of the impact of the high velocity gas stream onto the plates the TiCl₄ stream disintegrated into fine droplets. The chlorinator off-gas was subsequently fed through a pipe of 5.5 m, over which distance part of the TiCl₄ droplets evaporated, resulting in a temperature decrease of the chlorinator off-gas to *ca.* 200 °C. After having passing through 5.5 m, the cooled chlorinator off-gas was fed to a cyclone, in which the gases were separated from the solids. Any liquid droplets were discharged with the solids. The outlet temperature of the cleaned chlorinator off-gas was *ca.* 200 °C. 99.8 wt.% of the injected TiCl₄ was recovered in the gas stream. However, this still corresponds to a loss of TiCl₄ (in the form of liquid TiCl₄ being discharged with the solids) of 50 kg/h, which is considerable.

### Example (inventive)

The previous Example was repeated, but now a venturi in accordance with the present invention was installed instead of the conventional dual nozzle system. The venturi had two 1 inch schedule 40 entry pipes. Each entry pipe was provided with a guidance plate under a slope of 45° at the outlet creating a gap of approximately 2 mm for the liquid outlet. The other dimensions were, with reference to Figure 1, as follows:

| Symbol | *a* | *b* | *c* | *d* | *e* | *f* | *g* |
|---|---|---|---|---|---|---|---|
| Dimension in mm | 350 | 250 | 154 | 275 | 105 | 570 | 880 |

By using this venturi, the cyclone exit temperature of the gas could be reduced to 170 °C. Furthermore, the TiCl₄ loss due to liquid TiCl₄ being discharged from the cyclone with the solid particles was reduced to practically zero.

## Claims

1. Process for producing purified TiCl₄, comprising a step wherein liquid TiCl₄ droplets are sprayed into a TiCl₄ off-gas stream using a venturi.

2. Process according to claim 1, which process comprises a quench step, wherein a gaseous chlorinator off-gas is cooled by spraying liquid TiCl₄ droplets in said off-gas; and a subsequent solid separation step for separating particles from said off-gas, wherein the sprayed droplets in said quench step have a size that is sufficiently small for evaporating substantially completely said particles before entering said solid separation step.

3. Process according to claim 1, wherein the maximum diameter of said TiCl₄ droplets is less than 500 µm, preferably between 100 and 300 µm.

4. Process according to any of the previous claims, wherein the mean gas velocity of said off-gas in said quench step, as measured near the injection point of said TiCl₄ droplets, is from 20 to 60 m/s, preferably from 40 to 60 m/s.

5. Process according to any of the previous claims, wherein the off-gas is cooled to a temperature in the range of about 170 to about 210 °C, preferably about 170 °C.

6. Process according to any of the previous claims, wherein said solid separation step comprises a separation using a cyclone.

7. Process according to any of the previous claims, wherein the temperature after said solid separation step is less than 210 °C, preferably 200 °C or less, more preferably less than 190 °C.

8. Process according to any of the previous claims, wherein said venturi comprises two injection points.

9. Apparatus for producing TiCl₄ comprising a chlorinator, preferably a fluidized bed chlorinator, which is connected to a line quench, which line quench is connected to a solids separator, preferably a cyclone, wherein a venturi is connected to said line quench so that liquid TiCl₄ may be atomized by said venturi and may be fed inside said line quench.

10. Apparatus according to claim 9, wherein said venturi comprises two injection points.
